# EUROPÄISCHE PATENTANMELDUNG

(11) **EP 1 231 428 A1**
(43) Veröffentlichungstag der Anmeldung: **14.08.2002**
(21) Anmeldenummer: 02100036.9
(22) Anmeldetag: 18.01.2002
(51) Int. Cl.: F21V 8/00

(54) **Beleuchtungseinrichtung mit linienförmigen Lichtquellen**

(30) Priorität: 20.01.2001 DE 10102587
(71) Anmelder: Philips Corporate Intellectual Property GmbH, 52064 Aachen (DE); Koninklijke Philips Electronics N.V., 5621 BA Eindhoven (NL)
(72) Erfinder: Greiner, Horst, 52066, Aachen (DE)
(74) Vertreter: Volmer, Georg, Dipl.-Ing.

(57) **Zusammenfassung**

Es wird eine Beleuchtungseinrichtung mit einer Lichtleiterplatte (1) beschrieben, die eine Lichtaustrittsffäche (11) und eine Mehrzahl von Kanälen (20) mit jeweils mindestens einer im wesentlichen linienförmigen Lichtquelle (21) umfasst, und die insbesondere zur Hinterleuchtung von Flüssigkristallanzeigen wie LCD-Bildschirmen oder zur Anwendung als flächige Lichtquelle geeignet ist. Die Beleuchtungseinrichtung zeichnet sich insbesondere dadurch aus, dass die Kanäle (20) an ihrer der Lichtaustrittsfläche (11) zugewandten Oberseite (203) mit einer reflektierenden ersten Schicht (204) versehen sind und die Lichteinkopplung in die Lichtleiterplatte (1) durch Seitenwände (201, 202) der Kanäle erfolgt.

## Beschreibung

Die Erfindung betrifft eine Beleuchtungseinrichtung mit einer Lichtleiterplatte, die eine Lichtaustrittsfläche sowie eine Mehrzahl von Kanälen zur Aufnahme jeweils mindestens einer im wesentlichen linienförmigen Lichtquelle umfasst, und die insbesondere zur Hinterleuchtung von Flüssigkristallanzeigen wie LCD-Bildschirmen oder zur Anwendung als flächiger Lichtstrahler geeignet ist.

LCD-Bildschirme erfordern bekanntlich zur Sichtbarmachung eines Bildes eine möglichst gleichmäßige Hinterleuchtung ihrer gesamten Fläche. Insbesondere bei großen Beleuchtungsdnrichtungen besteht jedoch häufig die Schwierigkeit, dass eine hohe Lichtintensität nicht gleichmäßig genug auf der gesamten Lichtaustrittsfläche, vor der der Bildschirm angeordnet wird, erzeugt werden kann. Dies kann zu störenden Bildeffekten führen. Weiterhin sollen diese Beleuchtungseinrichtungen in vielen Fällen eine möglichst geringe Dicke aufweisen.

Es werden im wesentlichen zwei Arten dieser Beleuchtungseinrichtungen unterschieden. Bei der sogenannten direkten Hinterleuchtung ("direct-lit"), wie sie zum Beispiel aus der JP-5-27238 bekannt ist, befinden sich die Lichtquellen, bei denen es sich im allgemeinen um zylindrische Kalt- oder Warmkathodenlampen handelt, direkt hinter dem Bildschirm in der Lichtleiterplatte. Die Beleuchtungseinrichtung ist dabei an ihrer dem Bildschirm abgewandten Seite mit einer reflektierenden Schicht versehen. Um eine möglichst gleichmäßige Ausleuchtung des Bildschirms zu erreichen, darf der Abstand zwischen den Lichtquellen einerseits und dem Bildschirm andererseits nicht zu klein sein, da ansonsten das direkt von den Lampen auf den Bildschirm abgestrahlte Licht nicht kompensiert werden kann. Eine relativ gleichmäßige Lichtverteilung auf dem Bildschirm lässt sich zwar auch durch lichtstreuende Schichten vor dem Bildschirm erreichten. Dies erfordert im allgemeinen jedoch eine Bautiefe, die mehr als zwei Lampendurchmesser beträgt. Ein weiterer Nachteil ist dadurch bedingt, dass die lichtstreuenden Schichten zu Verlusten führen, so dass die Effizienz von solchen Hinterleuchtungen (d. h. der Anteil des von den Lichtquellen erzeugten Lichtes, das zur Beleuchtung eines LCD-Bildschirms tatsächlich zur Verfügung steht) bei höchstens etwa 50 Prozent liegt.

Bei der indirekten Hinterleuchtung ("side-lit"), wie sie zum Beispiel aus der EP-0717236 bekannt ist, befinden sich die Lichtquellen an den Seitenflächen (Schmalseiten) einer Lichtleiterplatte. Das Licht tritt durch diese Seitenflächen in die Lichtleiterplatte ein und pflanzt sich in dieser durch Totalreflektionen an den Seitenflächen der Platte fort. Durch geeignete, an der Vorder- oder Rückseite der Platte angebrachte Extraktionselemente wird das Licht dann zum Bildschirm hin ausgekoppelt. Die Vorteile dieser Gestaltung liegen darin, dass die Bautiefe geringer und die Ausleuchtung im allgemeinen gleichmäßiger als bei der direkten Hinterleuchtung ist. Die Nachteile bestehen jedoch darin, dass die Gesamt-Lichtmenge relativ begrenzt ist, da zur Einkopplung von Licht nur die vier Seitenflächen zur Verfügung stehen. Insbesondere bei größeren Platten ist es jedoch auch hierbei schwierig, durch geeignete Dimensionierung der Auskoppelstrukturen eine gleichmäßige Ausleuchtung zu erzielen.

Eine Aufgabe, die der Erfindung zugrunde liegt, besteht deshalb darin, eine Beleuchtungseinrichtung der eingangs genannten Art zu schaffen, die insbesondere zur Anwendung als Hinterleuchtung für große LCD-Bildschirme geeignet ist und bei geringer Bautiefe eine gleichmäßige und intensive Ausleuchtung des Bildschirms ermöglicht.

Gelöst wird diese Aufgabe gemäß Anspruch 1 mit einer Beleuchtungseinrichtung mit einer Lichtleiterplatte, die eine Lichtaustrittsfläche sowie eine Mehrzahl von Kanälen zur Aufnahme jeweils mindestens einer im wesentlichen linienförmigen Lichtquelle umfasst, und die sich dadurch auszeichnet, dass die Kanäle an ihrer der Lichtaustrittsfläche zugewandten Oberseite mit einer ersten reflektierenden Schicht bedeckt sind und die Lichteinkopplung in die Lichtleiterplatte durch Seitenwände der Kanäle erfolgt.

Diese Lösung vereint die Vorteile von direkten und indirekten Hinterleuchtungen miteinander und stellt somit eine große Lichtintensität mit gleichmäßiger Verteilung und einer hohen Effizienz der verwendeten Lichtquellen zur Verfügung. Einerseits braucht die Bautiefe nicht größer zu sein als bei den bekannten indirekten Hinterleuchtungen, da die Lichtquellen in die Platte eingelassen werden können. Es können somit sehr flache Beleuchtungseinrichtungen hergestellt werden, deren Bautiefe zwei Lampendurchmesser und somit etwa 6 bis 8 mm nicht übersteigt.

Andererseits kann eine mindestens genau so hohe Lichtintensität an der Lichtaustrittsfläche erzeugt werden, wie bei den direkten Hinterleuchtungen, da die Anzahl der Lichtquellen nicht durch die Anzahl der Seitenflächen beschränkt ist. Eine gewünschte Lichtintensität kann durch eine entsprechende Wahl der Anzahl von Lichtquellen bzw. Kanälen erzielt werden.

Die Unteransprüche haben vorteilhafte Weiterbildungen der Erfindung zum Inhalt.

Mit den Ausführungen gemäß den Ansprüchen 2 und 10 bis 12 wird eine besonders hohe Homogenität des Lichtes auf der Lichtaustrittsfläche erzielt, da kein Teil des von den Lichtquellen ausgehenden Lichtes direkt auf die Lichtaustrittsfläche gelangen kann.

Mit den Ausführungen gemäß den Ansprüchen 3, 8 und 9 wird die Effizienz der Lichtquellen weiter erhöht, während die Ausführungen gemäß den Ansprüchen 4 bis 6 besonders einfach herstellbar sind

Weitere Einzelheiten, Merkmale und Vorteile der Erfindung ergeben sich aus der folgenden Beschreibung von bevorzugten Ausführungsformen anhand der Zeichnung. Es zeigt:
- Fig 1: eine perspektivische Ansicht einer ersten Ausführungsform der Beleuchtungseinrichtung;
- Fig. 2: eine Seitenansicht der Beleuchtungseinrichtung gemäß Figur 1; und
- Fig 3: eine Seitenansicht einer zweiten Ausführungsform der Beleuchtungseinrichtung.

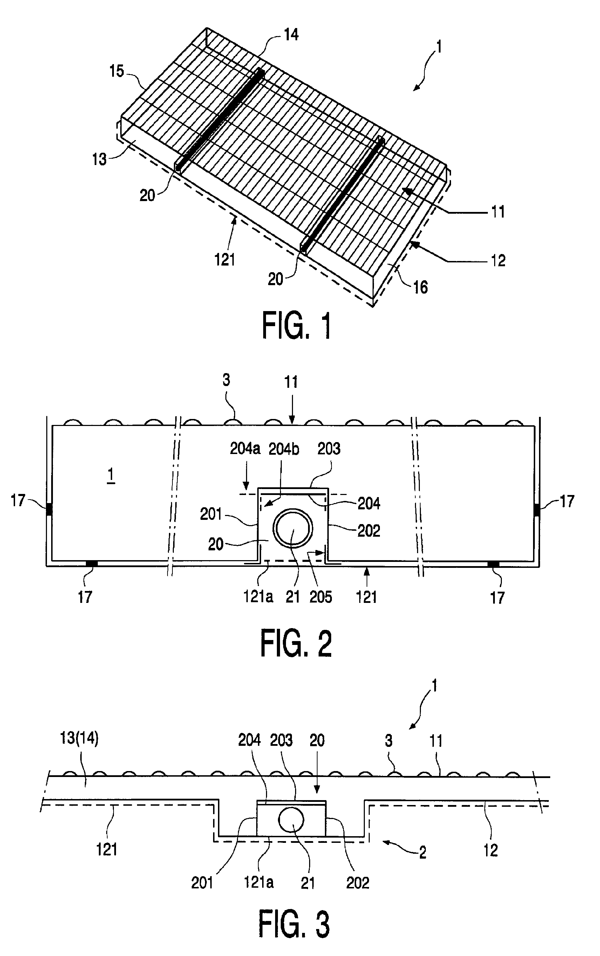

Figur 1 zeigt eine rechteckige Lichtleiterplatte 1, die in bekannter Weise aus einem lichttransparenten Material hergestellt ist. Die Platte umfasst an der Oberseite eine Lichtaustrittsfläche 11, aus der das Licht in bekannter Weise ausgekoppelt wird, eine dieser gegenüberliegende Unterseite 12, sowie zwei lange Seitenflächen 13,14 und zwei kurze Seitenflächen 15,16. In die Unterseite der Platte 1 sind eine Mehrzahl von Kanälen 20 eingebracht, die sich im wesentlichen parallel zu den kurzen Seitenflächen sowie über die gesamte Breite der Lichtleiterplatte 1 erstrecken.

Die Anzahl und der Abstand der Kanäle ist im wesentlichen beliebig und kann in Abhängigkeit von der Größe der Beleuchtungseinrichtung, der gewünschten Lichtstärke an der Lichtaustrittsfläche sowie der Art der Lichtquellen gewählt werden. Zur Erzielung einer gleichmäßigen Lichtverteilung sind die Kanäle möglichst gleichmäßig über die Lichtleiterplatte 1 verteilt.

Die Lichtleiterplatte 1 und insbesondere deren Lichtaustrittsfläche 11 muss nicht unbedingt rechteckig sein. Vielmehr sind alternativ dazu auch andere Formen wie zum Beispiel quadratische, runde oder ovale Formen usw. möglich. Weiterhin können die Kanäle in der Platte im wesentlichen jeden Verlauf nehmen. Neben der bevorzugten Anordnung parallel zu einer langen oder kurzen Seite der Lichtleiterplatte ist auch ein Verlauf entlang der Hauptdiagonalen der Platte möglich. Dieser Verlauf kann insbesondere für eine Anwendung in Monitoren verteilhaft sein. Darüber hinaus können die Kanäle auch kreisförmig, oval, mäanderförmig usw. in die Platte eingebracht sein. Schließlich können auch der Anfang und das Ende jedes Kanals in der Platte liegen.

Figur 2 zeigt eine Seitenansicht auf einen Teil einer der langen Seitenflächen 13, 14 im Bereich eines der Kanäle 20. In dem Kanal befindet sich eine Lichtquelle 21, die zum Beispiel eine Niederdruck-Gasentladungslampe sein kann und sich im wesentlichen über die gesamte Länge des ansonsten hohlen Kanals 20 erstreckt. Wie in dieser Darstellung zu erkennen ist, hat der Kanal Seitenwände 201, 202, die im wesentlichen senkrecht zur Lichtaustrittsfläche 11 verlaufen, sowie eine Oberseite 203, die im wesentlichen parallel zur Lichtaustittsfläche liegt. Die Seitenwände des Kanals sind durch das Material der Lichtleiterplatte 1 gebildet, während die Oberseite des Kanals mit einer beidseitig hochreflektierenden ersten Schicht 204 versehen ist.

Hierbei bestehen zwei Möglichkeiten. Entweder ist diese Schicht 204 direkt auf die Oberseite 203 des Kanals 20 aufgebracht, so dass kein Spalt oder Zwischenraum zwischen der Lichtleiterplatte 1 und der ersten Schicht 204 vorhanden ist. Es besteht somit ein optischer Kontakt zwischen dieser Schicht und der Lichtleiterplatte 1, wobei die Schicht möglichst spiegelnd reflektierend sein sollte. Alternativ dazu ist es auch möglich, die Schicht 204 von der Oberseite 203 des Kanals in Richtung des Innenraums des Kanals zu beabstanden, so dass ein Spalt entsteht, wobei die Schicht 204 zum Beispiel geringfügig in Richtung auf die Lichtquelle konkav verlaufen kann. In diesem Fall besteht kein optischer Kontakt zwischen der Schicht 204 und der Lichtleiterplatte 1, und das Licht aus der Platte wird bereits an der Oberseite 203 des Kanals bzw. der Übergangsfläche zwischen dem Material der Lichtleiterplatte und dem Spalt durch Totalreflektion in die Hatte zurückreflektiert. Da diese Reflektion nur sehr geringe Verluste verursacht, wird im allgemeinen bevorzugt, die erste Schicht 204 von der Oberseite 203 zu beabstanden.

Die Unterseite des Kanals ist schließlich durch eine hochreflektierende zweite Schicht 121 abgedeckt. Diese Schicht kann z.B. auf eine Bodenwand sowie vorzugsweise die Innenwände eines die Lichtleiterplatte 1 umschließenden Gehäuses (nicht dargestellt) aufgebracht sein, so dass die zweite reflektierende Schicht 121 die ganze Unterseite 12 und auch die Seitenflächen 13 bis 16 bedeckt, so dass von außen kein optischer Kontakt zu den abgedeckten Flächen besteht.

Versuche haben gezeigt, dass es vorteilhaft sein kann, die Unterseite des Kanals 20 mit einer auf der Lichtleiterplatte 1 aufliegenden, zusätzlichen hochreflektierenden Schicht 121a (gestrichelt angedeutet) abzuschließen, um auf diese Weise zu vermeiden, dass Licht aus dem Kanal 20 in den Spalt zwischen der Lichtleiterplatte 1 und der Schicht 121 eintritt und von dieser direkt durch die Lichtleiterplatte 1 hindurchreflektiert wird. Dadurch könnte nämlich ein unerwünschter heller Streifen auf der Lichtaustrittsfläche 11 verursacht werden.

An der Lichtaustrittsfläche 11 befindet sich schließlich eine Mehrzahl von Extraktionsdementen 3, mit denen das Licht in bekannter Weise aus der Lichtleiterplatte 1 ausgekoppelt wird.

Bei der Montage der Beleuchtungseinrichtung wird die Lichtleiterplatte 1 vorzugsweise mit Abstandhaltern 17 in ein Gehäuse eingebaut, die zwischen die Seitenflächen 13 bis 16 der Lichtleiterplatte und die Innenwände des Gehäuses sowie zwischen die Unterseite 12 der Lichtleiterplatte und die Bodenwand des Gehäuses eingebracht werden. Dadurch wird die zweite reflektierende Schicht 121 (an den Gehäuse-Innenwänden) von der Lichtleiterplatte 1 beabstandet, d.h. es bleibt zwischen der Schicht 121 einerseits und den Seitenflächen 13 bis 16 bzw. der Unterseite 12 andererseits ein Luftspalt vorhanden.

Die von der mindestens einen Lichtquelle 21 ausgehenden Lichtstrahlen können in das Material der Lichtleiterplatte 1 nur durch die Seitenflächen 201, 202 des Kanals 20 eindringen. Sie breiten sich in der Lichtleiterplatte 1 durch nahezu verlustfreie Totalreflektionen an den Seitenflächen 13 bis 16 sowie der Unterseite 12 der Lichtleiterplatte 1 bzw. der dort angeordneten zweiten Schicht 121 aus, bis sie an der Lichtaustrittsfläche 11 ausgekoppelt werden. Dies soll im folgenden im Detail beschrieben werden.

Trifft ein sich in der Lichtleiterplatte ausbreitender Lichtstrahl auf die Seitenwände 201, 202 eines Kanals 20, so dringt er in diesen ein und wird innerhalb des Kanals an der Lichtquelle 21 und /oder der hochreflektierenden ersten bzw. zweiten Schicht 204; 121 (121a), gestreut, bevor er den Kanal durch die Seitenwände 201, 202 wieder verlässt.

Sofern ein sich in der Lichtleiterplatte ausbreitender Lichtstrahl auf die äußere Oberseite 203 eines Kanals trifft, wird er entsprechend den oben beschriebenen Alternativen entweder an der ersten Schicht 204 reflektiert, wenn diese in optischem Kontakt mit der Lichtleiterplatte 1 steht, oder er unterliegt einer Totalreflektion an der Oberseite 203, wenn kein optischer Kontakt zu der zweiten Schicht besteht, so dass der Lichtstrahl in beiden Fällen an dem Kanal 20 vorbeigeleitet wird.

Durch diese Art der Lichteinkopplung und Lichtausbreitung kommt es zu einer sehr homogenen Verteilung des Lichtes in der gesamten Lichtleiterplatte 1 und insbesondere zu einer sehr gleichmäßigen Verteilung der Beiträge der einzelnen Lichtquellen zu dem an der Lichtaustrittsfläche 11 ausgekoppelten Licht. Da sich das Licht jeder Lichtquelle über die gesamte Lichtleiterplatte verteilt und nicht direkt von den Lichtquellen auf die Lichtaustrittsfläche auftreffen kann, ist darüber hinaus der Einfluss einer einzelnen Lichtquelle durch zum Beispiel schwankende Intensität oder im Fehlerfall gering und tritt kaum in Erscheinung. Diese Eigenschaften verbessern sich mit zunehmender Anzahl von Lichtquellen.

Das Licht kann in bekannter Weise mit den Extraktionselementen 3 an der Lichtaustrittsfläche 11 der Platte 1 ausgekoppelt werden, um zum Beispiel eine darauf angeordnete Flüssigkristallanzeige oder einen LCD-Bildschirm zu beleuchten. Durch geeignete Dimensionierung bzw. Anordnung der Extraktionselemente, die auch unregelmäßig sein kann, kann die Gleichmäßigkeit der Ausleuchtung weiter verbessert werden.

Die Lichtleiterplatte 1 befindet sich vorzugsweise in einem Gehäuse (nicht dargestellt) mit Wänden, die mit der zweiten Schicht 121 beschichtet sind und gemäß Figur 2 die Unterseite 12 sowie die Seitenflächen 13 bis 16 abdecken, so dass von außen kein optischer Kontakt zu den abgedeckten Flächen besteht. Die zweite Schicht 121 kann dabei spiegelnd oder diffus reflektierend sein.

Weiterhin besteht auch die Möglichkeit, die zweite Schicht 121 direkt auf der betreffenden Seitenfläche 13 bis 16 bzw. der Unterseite 12 anzuordnen, so dass die Abstandhalter 17 entfallen. Dies hat allerdings den Nachteil, dass insbesondere in dem Fall, in dem die zweite Schicht diffus reflektierend ist, ein Teil des auftreffenden Lichtes von den Seitenflächen direkt in Richtung auf die Lichtaustrittsfläche 11 reflektiert werden kann, was zu nachteiligen Effekten führen würde. Diese können zwar weitgehend vermieden werden, wenn die zweite Schicht spiegelnd reflektierend ist, solche Schichten sind jedoch wesentlich teurer, da sie mit einem vergleichbar hohen Reflektionsgrad nur mit großem Aufwand hergestellt und auf die Flächen der Lichtleiterplatte aufgebracht werden können.

Es hat sich nun überraschend gezeigt, dass dieses Problem gelöst werden kann, wenn die zweite Schicht 121 nicht direkt auf die betreffende Seitenfläche 13 bis 16 bzw. die Unterseite 12 aufgebracht wird, sondern einen Abstand von zum Beispiel 0,1 mm von der Lichtleiterplatte aufweist, so dass zwischen beiden aufgrund eines Luftspaltes kein optischer Kontakt besteht. Zu diesem Zweck sind die Abstandhalter 17 vorgesehen.

Tritt nun ein Lichtstrahl durch eine der Seitenflächen 13 bis 16 (oder die Unterseite 12) aus der Lichtleiterplatte 1 aus, so wird er zunächst an der Seitenfläche gebrochen, durchläuft dann den Luftspalt und wird von der vorzugsweise diffus reflektierenden zweiten Schicht 121 zurückreflektiert. Nachdem er den Luftspalt erneut durchlaufen hat, tritt er wieder in die Lichtleiterplatte 1 ein und erfüllt unter der Voraussetzung, dass der Brechungsindex der Platte nicht kleiner als 1,41 ist, weiterhin die Bedingung für die Totalreflektion.

Dadurch werden auch diejenigen Lichtanteile, die die Lichtleiterplatte durch die Seitenflächen oder die Unterseite verlassen, wieder in diese zurückreflektiert. Zur Erzeugung der zweiten Schicht 121 können weiße Folien oder weiße Farben verwendet werden, die mit Reflektionsgraden von über 95 bis 98 % allgemein erhältlich sind. Es ist natürlich auch möglich, eine spiegelnd reflektierende zweite Schicht 121 mit einem Abstand von der Lichtleiterplatte zu verwenden. Allerdings hat eine diffus reflektierende Schicht den Vorteil, dass das Licht nach der Reflektion noch besser in der Lichtleiterplatte verteilt wird und dass diese Schicht mit höheren Reflektionsgraden und zu geringeren Kosten als eine spiegelnd reflektierende Schicht erzeugt werden kann.

Mit dieser Konfiguration ist somit eine sehr wirksame Einkopplung sowie eine gleichmäßige und weitgehend verlustfreie Verteilung des Lichtes einer großen Anzahl von Lichtquellen möglich.

Es hat sich ferner als vorteilhaft erwiesen, die hochreflektierende erste Schicht 204 an der Oberseite 203 der Kanäle 20 entweder mit einem ersten Abschnitt 204a (in Figur 2 gestrichelt angedeutet) in horizontaler Richtung um einige Millimeter in die Lichtleiterplatte 1 fortzusetzen (zu diesem Zweck würde die Lichtleiterplatte aus zwei Schichten zusammengesetzt werden). Alternativ dazu (insbesondere wenn die Schicht durch Aufdampfen realisiert wird) kann die Schicht mit einem zweiten Abschnitt 204b (in Figur 2 gestrichelt angedeutet) in dazu senkrechter Richtung um die oberen Innenkanten des Kanals und um einige Millimeter entlang der Seitenwände an diesen nach unten weitergeführt werden. Mit diesen Abschnitten wird jeweils vermieden, dass an den Kanten der Kanäle unerwünschtes Streulicht entsteht.
Zu diesem Zweck können weiterhin auch die an die gegenüberliegenden unteren Kanten der Kanäle 20 angrenzenden Bereiche der Seitenwände 201 bzw. der Unterseite 12 der Lichtleiterplatte 1 mit einer hochreflektierenden dritten Schicht 205 versehen sein, die sich jeweils einige Millimeter entlang dieser Bereiche erstreckt.

Als Lichtquellen können entweder zylindrische Gasentladungslampen oder übliche Lichtleiter, in die das Licht von außerhalb der Lichtleiterplatte eingespeist wird, verwendet werden. Durch die sehr wirksame Einkopplung und gute Verteilung des Lichtes in der Platte ist es möglich, diese mit relativ wenigen, dafür aber lichtstarken Lichtquellen zu versehen. Dies reduziert den Aufwand zur Herstellung der Beleuchtungseinrichtung und führt auch aufgrund der nur geringen Anzahl von erforderlichen Lampen und Treiberschaltungen zu einer erheblichen Kostenreduzierung.

Figur 3 zeigt eine zweite Ausführungsform der Erfindung in Seitenansicht. Auch diese Ausführungsform umfasst eine Lichtleiterplatte 1, die zum Beispiel gemäß der Darstellung in Figur 1 rechteckig mit zwei gegenüberliegenden langen Seitenflächen 13,14 und zwei gegenüberliegenden kurzen Seitenflächen 15, 16 sein kann, oder eine andere der oben genannten Formen aufweist.

Im Unterschied zur ersten Ausrührungsform umfasst die Lichtleiterplatte 1 eine Mehrzahl von lichtleitenden Elementen 2, in deren der Lichtaustrittsfläche 11 gegenüberliegenden Unterseite die Kanäle 20 eingelassen sind. Die Elemente 2, die sich ebenso wie die Kanäle im wesentlichen über die gesamte Breite der Lichtleiterplatte 1 erstrecken und parallel zu den kurzen Seitenflächen verlaufen können, sind vorzugsweise durch einen rechteckigen Stab gebildet, der zum Beispiel durch Aufkleben auf die Unterseite 12 optisch fest mit dieser verbunden wird.

Die Elemente 2 können in der Platte im wesentlichen jeden Verlauf nehmen. Neben der bevorzugten Anordnung parallel zu einer langen oder kurzen Seite der Lichtleiterplatte ist auch ein Verlauf entlang der Hauptdiagonalen der Platte möglich. Dieser Verlauf kann wiederum für eine Anwendung in Monitoren vorteilhaft sein. Darüber hinaus können die Elemente 2 auch kreisförmig, oval, mäanderförmig usw. angeordnet sein.
Die lichtleitenden Elemente 2 sind vorzugsweise aus dem gleichen lichtleitenden Material hergestellt wie die übrigen Teile der Lichtleiterplatte 1. Die Anzahl der lichtleitenden Elemente 2 und damit auch die Anzahl der Kanäle 20 und der Lichtquellen 21 wird in Abhängigkeit von der an der Lichtaustrittsfläche 11 der Platte 1 gewünschten Lichtintensität gewählt.

Darüber hinaus gilt im Hinblick auf die erste reflektierende Schicht 121 und ihre Beabstandung von der Lichtleiterplatte 1, die zusätzliche Schicht 121a, die zweite reflektierende Schicht 204, die ersten und zweiten Abschnitte 204a, 204b, die dritte reflektierende Schicht 205, die Form der Kanäle sowie die Art der Lichtquellen jeweils das gleiche, was oben im Zusammenhang mit der ersten Ausführungsform diesbezüglich erläutert wurde.

Die Funktion dieser zweiten Ausführungsform ist im wesentlichen die gleiche wie diejenige der ersten Ausrührungsform. Das von der Lichtquelle 21 ausgestrahlte Licht kann den Kanal 20 nur durch dessen Seitenwände 201, 202 verlassen und koppelt sich zunächst in das lichtleitende Element 2 ein. Durch im wesentlichen verlustfreie Totalreflektionen an der hochreflektierenden zweiten Schicht 121 breitet es sich von dem lichtleitenden Element 2 auch in den übrigen Teil der Lichtleiterplatte aus und wird somit gleichmäßig über die gesamte Platte verteilt. Das Licht wird wiederum in bekannter Weise mit Extraktionselementen 3 an der Lichtaustrittsfläche 11 der Platte 1 ausgekoppelt.

Versuche haben gezeigt, dass mit dieser Ausrührungsform zwischen etwa 70 und 80 Prozent der von den Lichtquellen abgegebenen Lichtleistung in die Platte eingekoppelt wird bzw. an der Lichtaustrittsfläche 11 zur Verfügung steht.

Ein weiterer Vorteil dieser Ausführungsform besteht darin, dass sich gegenüber der ersten Ausführungsform weitere Einsparungen im Hinblick auf das Gewicht und den benötigten Platz erzielen lassen. Die lichtleitenden Elemente 2 haben zum Beispiel eine Breite von einigen Zentimetern und eine Höhe von etwa zwei bis drei Durchmessern der Lichtquelle, während die übrigen Teile der Lichtleiterplatte eine Dicke von etwa 5 mm aufweisen können.

Das erfindungsgemäße Prinzip lässt sich nicht nur mit linienförmigen Lichtquellen, sondern auch mit punktförmigen Lichtquellen wie zum Beispiel LEDs realisieren. Zu diesem Zweck werden entweder anstelle der Kanäle 20 gemäß den Figuren 1 bis 3 im wesentlichen zylindrische oder quadratische Aussparungen in die Lichtleiterplatte bzw. die lichtleitenden Elemente 2 eingebracht, in denen dann die Lichtquellen angeordnet werden. Alternativ dazu ist es auch möglich, die linienförmigen Lichtquellen durch eine Mehrzahl von in einer Reihe angeordneten LEDs zu realisieren. In diesem Fall werden die LEDs in den Kanälen 20 an deren Unterseite angeordnet.

Die beschriebenen Eigenschaften der erfindungsgemäßen Beleuchtungseinrichtung kann man sich in besonders vorteilhafter Weise auch dann zunutze machen, wenn das Licht von verschiedenfarbigen Lichtquellen in der Lichtleiterplatte gemischt und als Mischfarbe an der Lichtaustrittsfläche abgegeben werden soll. Zur Erzeugung einer homogenen und gleichmäßigen Farbe des Mischlichtes werden die Lichtquellen vorzugsweise so angeordnet, dass benachbarte Lichtquellen stets Licht mit unterschiedlichen Farben abgeben.

Schließlich sei darauf hingewiesen, dass die Beabstandung der reflektierenden zweiten Schicht 121 von den Seitenflächen bzw. der Unterseite der Lichtleiterplatte unabhängig von der Art, Anzahl und Anordnung der Lichtquellen ist. Die Beabstandung kann zum Beispiel auch dann vorgenommen werden, wenn die Lichtquellen nicht in der Lichtleiterplatte sondern an einer oder mehreren ihrer Seitenflächen angeordnet sind. Auch in diesem Fall würden durch eine solche reflektierende und beabstandete Schicht an den übrigen Seitenflächen die oben beschriebenen Vorteile in Hinblick auf eine im wesentlichen verlustfreie und den Bedingungen für die Totalreflektion unterliegende Rückreflektion des durch die betreffende Seitenfläche ausgetretenen Lichtes erreicht werden.

## Patentansprüche

1. Beleuchtungseinrichtung mit einer Lichtleiterplatte (1), die eine Lichtaustrittsfläche (11) sowie eine Mehrzahl von Kanälen (20) zur Aufnahme jeweils mindestens einer im wesentlichen linienförmigen Lichtquelle (21) umfasst,
**dadurch gekennzeichnet,**
**dass** die Kanäle (20) an ihrer der Lichtaustrittsfläche (11) zugewandten Oberseite (203) mit einer ersten reflektierenden Schicht (204) bedeckt sind und die Lichteinkopplung in die Lichtleiterplatte (1) durch Seitenwände (201, 202) der Kanäle erfolgt.

2. Beleuchtungseinrichtung nach Anspruch 1,
**dadurch gekennzeichnet,**
**dass** die Seitenwände (201, 202) der Kanäle (20) im wesentlichen senkrecht zu der Lichtaustrittsfläche (11) und die Oberseiten (203) der Kanäle (20) im wesentlichen parallel zu der Lichtaustrittsfläche (11) verlaufen.

3. Beleuchtungseinrichtung nach Anspruch 1,
**dadurch gekennzeichnet,**
**dass** die Kanäle (20) an ihrer der Oberseite (203) gegenüberliegenden Unterseite mit einer zweiten reflektierenden Schicht (121; 121a) bedeckt sind.

4. Beleuchtungseinrichtung nach Anspruch 1,
**dadurch gekennzeichnet,**
**dass** die Kanäle (20) einen im wesentlichen rechteckigen Querschnitt aufweisen.

5. Beleuchtungseinrichtung nach Anspruch 1,
**dadurch gekennzeichnet,**
**dass** die Kanäle (20) in eine der Lichtaustrittsfläche (11) gegenüberliegende Unterseite (12) der Lichtleiterplatte (1) eingebracht sind.

6. Beleuchtungseinrichtung nach Anspruch 1,
**dadurch gekennzeichnet,**
**dass** die Lichtleiterplatte (1) eine Mehrzahl von lichtleitenden Elementen (2) umfasst, in die die Kanäle (20) eingebracht sind und die mit der der Lichtaustrittsfläche (11) gegenüberliegenden Unterseite (12) der Lichtleiterplatte (1) optisch fest verbunden sind.

7. Beleuchrungseinrichtung nach Anspruch 1,
**dadurch gekennzeichnet,**
**dass** die jeweils mindestens eine Lichtquelle (21) eine Niederdruck-Gasentladungslampe ist.

8. Beleuchtungseinrichtung nach Anspruch 3,
**dadurch gekennzeichnet,**
**dass** sich die zweite reflektierende Schicht (121) über die Seitenflächen (13 bis 16) und die Unterseite (12) der Lichtleiterplatte (1) erstreckt.

9. Beleuchtungseinrichtung nach Anspruch 8,
**dadurch gekennzeichnet,**
**dass** die zweite reflektierende Schicht (121) einen Luftspalt bildenden Abstand von der Lichtleiterplatte (1) aufweist.

10. Beleuchtungseinrichtung nach Anspruch 1,
**dadurch gekennzeichnet,**
**dass** sich die erste reflektierende Schicht (204) mit einem ersten Abschnitt (204a) in horizontaler Richtung in die Lichtleiterplatte (1) fortsetzt.

11. Beleuchtungseinrichtung nach Anspruch 1,
**dadurch gekennzeichnet**
**dass** sich die erste reflektierende Schicht (204) mit einem zweiten Abschnitt (204b) entlang der Seitenwände (201) der Kanäle (20) fortsetzt.

12. Beleuchtungseinrichtung nach Anspruch 1,
**dadurch gekennzeichnet,**
**dass** die der Oberseite (203) gegenüberliegenden Kanten der Kanäle (20) mit einer dritten reflektierenden Schicht (205) umgeben sind.

13. Flüssigkristallanzeige mit einer Beleuchtungseinrichtung nach einem der vorhergehenden Ansprüche.
